(19) Europäisches Patentamt
European Patent Office
Office européen des brevets

(11) EP 0 801 981 A1

(12) DEMANDE DE BREVET EUROPEEN

(43) Date de publication:
22.10.1997 Bulletin 1997/43

(51) Int Cl.6: B01J 49/00

(21) Numéro de dépôt: 97400874.0

(22) Date de dépôt: 18.04.1997

(84) Etats contractants désignés:
AT BE CH DE ES FR GB GR IT LI LU NL PT

(30) Priorité: 19.04.1996 FR 9604915

(71) Demandeur: Saline d'Einville
54370 Einville (FR)

(72) Inventeur: Bruant, Michel
54520 Laxou (FR)

(74) Mandataire: Gillard, Marie-Louise et al
Cabinet Beau de Loménie
158, rue de l'Université
75340 Paris Cédex 07 (FR)

# (54) Nouvel agent régénérant pour adoucisseurs d'eau

(57) La présente invention a pour objet un agent régénérant pour adoucisseur d'eau qui permet d'éviter et/ou détruire efficacement la formation d'une pellicule de matière organique sur l'adoucisseur d'eau.

Ledit agent régénérant comprend un sel régénérant en combinaison avec le bleu de méthylène en tant qu'additif.



Printed by Jouve, 75001 PARIS (FR)

## Description

La présente invention a pour objet un nouvel agent régénérant pour adoucisseurs d'eau qui permet d'éviter et/ou détruire efficacement la formation d'une pellicule de matière organique sur l'adoucisseur d'eau.

L'adoucissement partiel ou total de l'eau, c'est-à-dire le remplacement par $Na^+$ des cations $Mg^{2+}$ et des cations $Ca^{2+}$, qui sont responsables de la dureté de l'eau, est obtenu actuellement par passage sur une zéolithe ou sur une résine échangeuse d'ions. Ces solides macromoléculaires peuvent en effet échanger les ions $Na^+$ qu'ils contiennent avec les ions $Ca^{2+}$ ou $Mg^{2+}$ contenus dans l'eau à traiter.

Les zéolithes sont des tectosilicates hydratés de formule générale $[M_{x/n}\ (AlO_2)_x(SiO_2)_y](H_2O)_z$ où n = nombre de charge du cation M. Dans le cas d'un adoucisseur, le cation M est généralement le sodium.

Une des résines cationiques, couramment utilisée dans l'adoucissement de l'eau est le sel de sodium du polystyrène (PS) sulfuré PS $SO_3$-$Na^+$ et l'échange correspond à la réaction :

$$2(PS\ SO_3^-Na^+) + Ca^{2+} \leftrightarrow [(PS\ SO^{3-})_{2+}\ Ca^{2+}] + 2Na^+.$$

Quand tout ou partie de cette résine est saturée en calcium et/ou en magnésium, elle perd sa capacité d'adoucissement et doit être traitée.

Cette régénération s'effectue en imbibant la résine d'une solution dont les ions vont prendre la place des cations de la résine saturée. On utilise généralement pour la régénération une saumure saturée de chlorure de sodium.

Cette étape dépend évidemment du type d'adoucisseur. En fonction de la capacité, de la quantité des résines, on détermine le type de cycle de régénération à entreprendre. En outre, la fréquence de ce dernier dépend du rapport :

$$\frac{\text{capacité d'échange total des résines}}{\text{dureté de l'eau x volume d'eau à traiter}}$$

A l'heure actuelle, le moyen de régénérer les résines est soit l'utilisation de saumure prête à l'emploi (essentiellement dans le cas de grosses installations d'adoucissement), soit l'utilisation de sels qui, après dissolution dans l'eau (dans le bac faisant partie de l'installation d'adoucissement), devient une saumure saturée.

Toutefois, ce sel ne peut pas régénérer totalement la résine. En effet, ce sel régénérant ne permet pas l'élimination de la pellicule de matière organique qui se forme à la surface de la résine échangeuse d'ions. Cette pellicule provient de la matière organique qui est contenue en plus ou moins grande quantité dans l'eau.

Cette matière organique encrassant les résines (à plus ou moins brève échéance), ces dernières perdent évidemment en capacité d'échange.

Par suite, les régénérations ne se font plus normalement. Le volume d'eau pouvant être traité entre deux cycles de régénérations diminue. Il faut alors augmenter les fréquences des cycles et ainsi, cela engendre une consommation plus importante de sel qu'il est nécessaire (le rendement eau traitée / quantité de sel employé diminue), d'où un coût de fonctionnement plus important et aussi une pollution plus importante. En outre, il peut arriver à un certain moment, que l'on doive faire appel à un professionnel qui procède à la décontamination.

Des études menées en laboratoire ont montré l'apparition très rapide de ce phénomène de formation de pellicule au contact d'une eau qui contient de la matière organique, conduisant à une perte de capacité d'échange de la résine.

On a maintenant trouvé de manière surprenante qu'en ajoutant un additif aux sels régénérants connus, on peut éviter et/ou détruire la formation d'une pellicule de matière organique sur l'adoucisseur d'eau.

Ainsi, le produit de l'invention permet en une seule étape de régénérer, décontaminer et éviter la contamination de l'adoucisseur d'eau.

La présente invention concerne donc un nouvel agent régénérant pour adoucisseur d'eau caractérisé en ce qu'il contient un sel régénérant et le bleu de méthylène à titre d'additif. Le nom chimique du bleu de méthylène est le chlorure de 3,7-bis(diméthylamino)phénothiazin-5-ium qui a la formule développée suivante (Merck Index. 10è édition, page 868) :

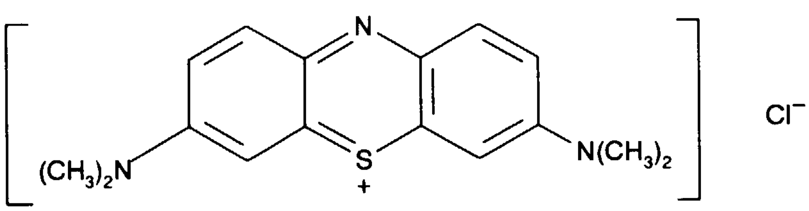

Elle concerne également l'utilisation du bleu de méthylène comme additif dans les agents régénérants pour adoucisseur d'eau.

Ajouté au sel régénérant, même à faible dose, on a constaté les effets positifs du bleu de méthylène. Dans certains cas, on a retrouvé dès la première utilisation de l'agent régénérant selon l'invention la capacité totale d'échange, ce dernier permettant de supprimer la pellicule de matière organique et de s'affranchir des effets néfastes entraînés par une régénération partielle de l'adoucisseur.

Le bleu de méthylène est utilisé à raison de 1,5 mg à 50 mg/kg de sel régénérant, de préférence de 1,5 à 20 mg/kg de sel régénérant.

Aux fins de l'invention, on peut utiliser un sel régénérant quelconque couramment utilisé pour l'adoucissement de l'eau. Un sel régénérant particulièrement approprié aux fins de l'invention est le chlorure de sodium.

Afin d'obtenir une utilisation facile du produit par l'utilisateur, on a réalisé un agent régénérant prêt à l'emploi qui peut se présenter sous différentes formes : poudre, pastilles, granulés, comprimés, voire saumures.

Les différentes formes comprennent 1,5 à 50 mg de bleu de méthylène par kg de sel régénérant, de préférence de 1,5 à 20 mg/kg de sel régénérant.

EXEMPLE

On a utilisé un adoucisseur d'eau de type résine cationique acide fort, DOWEX MONOSPHERE C.400 (Na), dans laquelle le support correspond à une matrice hydrocarbonée formée par copolymérisation de styrène et de divinylbenzène et le groupe fonctionnel, fixé par covalence au support, est l'acide sulfonique. La capacité totale de cette résine est de 2,2 eq/l.

La matière organique est constituée d'acides humiques obtenus traditionnellement par percolation d'eau à travers de la tourbe.

On a utilisé un agent régénérant selon l'invention contenant 15 mg de bleu de méthylène par kg de chlorure de sodium comme sel régénérant.

Etape 1

On a adouci un volume de 750 ml d'eau contenant des ions $Ca^{2+}$ (202 mg / $Mg^{2+}$ ((39 mg) et des composés organiques (acides humiques de tourbe) à 20 mg de COT (carbone organique total) et on a mesuré la capacité de rétention de la résine échangeuse d'ions C1 = 3000 mg/l de résine (exprimé en $Ca^{2+}$).

On a procédé à la régénération de la résine échangeuse d'ions, d'une part avec une solution classique de chlorure de sodium saturée (Procédé A), d'autre part, avec la solution de l'agent régénérant selon l'invention (Procédé B) (autre dispositif).

Etape 2

On a de nouveau adouci un volume de 750 ml d'eau de même composition que précédemment.

La résine qui a été régénérée avec la solution seule de chlorure de sodium a donné une capacité $C_{2A}$ = 3000 mg/l de résine (exprimé en $Ca^{2+}$). La résine qui a été régénérée avec le sel régénérant de la présente invention donne une capacité $C_{2B}$ = 5 600 mg/l. On a constaté que $C_{2B} > C_{2A}$.

Ainsi, grâce au procédé B et à l'utilisation de l'agent régénérant selon la présente invention, la résine échangeuse d'ions après régénération gagne en capacité, ce qui confirme que le sel régénérant de la présente invention permet d'éliminer la pellicule de matière organique sur l'adoucisseur d'eau utilisé.

**Revendications**

1. Agent régénérant pour adoucisseur d'eau, caractérisé en ce qu'il comprend un sel régénérant en combinaison avec le bleu de méthylène en tant qu'additif.

2. Agent régénérant selon la revendication 1, caractérisé en ce que le sel régénérant est du chlorure de sodium.

3. Agent régénérant selon les revendications 1 ou 2, caractérisé en ce qu'il comprend 1,5 à 50 mg de bleu de méthylène par kg de sel régénérant.

4. Agent régénérant selon les revendications 1 ou 2, caractérisé en ce qu'il comprend 1,5 à 20 mg de bleu de méthylène par kg de sel régénérant.

**5.** Utilisation du bleu de méthylène en tant qu'additif dans un agent régénérant pour adoucisseur d'eau.

Office européen des brevets

# RAPPORT DE RECHERCHE EUROPEENNE

Numero de la demande
EP 97 40 0874

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DATABASE WPI<br>Week 9621<br>Derwent Publications Ltd., London, GB;<br>AN 96-201157<br>XP002037531<br>& BR 9 402 731 A (BONETTI) , 9 Avril 1996<br>* abrégé *<br>----- | 1 | B01J49/00 |

| DOMAINES TECHNIQUES RECHERCHES (Int.Cl.6) |
|---|
| B01J |

Le présent rapport a été établi pour toutes les revendications

| Lieu de la recherche | Date d'achèvement de la recherche | Examinateur |
|---|---|---|
| LA HAYE | 12 Août 1997 | Wendling, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........
& : membre de la même famille, document correspondant

EPO FORM 1503 03.82 (P04C02)